# EUROPEAN PATENT APPLICATION

(11) **EP 4 671 389 A1**
(43) Date of publication of application: **31.12.2025**
(21) Application number: 24778993.6
(22) Date of filing: 28.02.2024
(51) Int. Cl.: C21B 11/10, C21B 13/00

(54) **METHOD FOR PRODUCING MOLTEN PIG IRON**

(30) Priority: 29.03.2023 JP 2023053313
(71) Applicant: JFE Steel Corporation, Tokyo, 100-0011 (JP)
(72) Inventor: Iwami, Yuji, Tokyo 100-0011 (JP); Oda, Nobuhiko, Tokyo 100-0011 (JP); Nakamura, Naoto, Tokyo 100-0011 (JP); Higuchi, Takahide, Tokyo 100-0011 (JP)
(74) Representative: Grünecker Patent- und Rechtsanwälte PartG mbB
(86) International application number: PCT/JP2024/007248
(87) International publication number: WO 2024/202853

(57) **Abstract**

Provided is a method for producing molten pig iron that can achieve high energy efficiency in a melting step of melting reduced iron in a submerged arc furnace. Specifically, the method for producing molten pig iron includes a melting step of melting, in a submerged arc furnace, an iron source raw material including reduced iron with an average metallization rate of 60% or greater to obtain molten pig iron, the melting step also including at least one or both of adding a slag forming material to adjust the basicity (CaO/SiO₂) of molten slag formed on the molten pig iron, and adding a carbonaceous material to adjust the C content of the molten pig iron. Herein, the metallization rate refers to the mass percentage of a metallic iron component to the total mass of an iron component contained in the reduced iron, and the basicity (CaO/SiO₂) of the molten slag refers to the mass ratio of CaO to SiO₂.

## Description

### Technical Field

The present invention relates to a method for producing molten pig iron by melting an iron source raw material including reduced iron in a submerged arc furnace. In the following description, the symbol "t", which is the unit of mass, represents 10³ kg. In this specification, the numerical range "x to y" represents the range of x to y, both inclusive. In addition, "t-p" is the unit representing the mass of molten pig iron.

### Background Art

In recent years, reduction of CO₂ emissions has been desired to reduce environmental burdens. Even in the steel industry, the production of pig iron using the direct-reduction (DR) process is drawing attention, replacing the blast furnace process that involves large CO₂ emissions. The DR process includes reducing an iron-containing agglomerate in a shaft furnace, for example, to produce direct reduced iron (DRI). An iron source raw material including such reduced iron and iron scrap, for example, is charged into an electric arc furnace (EAF) or a submerged arc furnace (SAF), for example, and then heated to be melted. Then, pig iron is produced with slag separated therefrom.

Pellets or lump ore are used as agglomerated raw material for direct reduction. The pellets are obtained by mixing powder ore, dust, an auxiliary raw material, and a binder, before granulation, and sintering the mixture. Bentonite is commonly used as the binder.

Patent Literatures 1 and 2 each disclose a technology for obtaining molten metal by performing arc heating on preliminary reduced metal or solid reduced iron. According to such a technology, using reduced iron with a high metallization rate can reduce the thermal energy required to melt the reduced iron. Thus, each patent literature describes a technology that involves the use of reduced iron with a metallization rate of 60% or greater, preferably, 80% or greater, and further preferably, 90% or greater.

Patent Literature 3 discloses a method for reducing and melting an iron oxide-containing iron raw material by charging the material into a DC arc furnace for reduction and melting. Specifically, Patent Literature 3 describes a method that involves the use of an iron oxide-containing iron raw material having an iron metallization rate of 45% to 95%, and containing 4 to 20 mass% of oxide, excluding iron oxide.

Patent Literature 4 discloses an electric furnace including one or more upper electrodes, one or more bottom-blowing tuyeres, a mechanical stirrer equipped with an impeller, and a charging device that charges an iron oxide-containing iron raw material. The operation performed using the electric furnace includes melting and reducing an iron oxide-containing iron raw material charged onto initial molten pig iron. Therefore, it is presumably possible to melt and reduce the iron oxide-containing iron raw material in a high iron yield. With a method for melting and reducing an iron oxide-containing iron raw material using such an electric furnace, it is possible to use the full amount of a CO gas generated in a DC arc furnace as a CO gas for reduction in a preliminary reducing furnace. Besides, it is possible to prevent an increase in the electric power unit consumption by suppressing an increase in the carbonaceous material unit consumption and suppressing an increase in the necessary reduction heat in the DC arc furnace without causing a decrease in the entire reduction efficiency. Patent Literature 4 describes that the method involves the use of an iron oxide-containing raw material having a metallization rate of 45% to 95%.

### Citation List

### Patent Literature

Patent Literature 1: JP-A-2003-105415
Patent Literature 2: JP-A-2009-074120
Patent Literature 3: JP-A-2018-003075
Patent Literature 4: International Publication No. WO 2019/082762

### Summary of Invention

### Technical Problem

An electric arc furnace (EAF) has been mainly used as a facility for melting reduced iron in the DR process. Due to facility constraints, the EAF requires the use of high-quality reduced iron with a low slag rate (i.e., a high Fe content). Therefore, high-grade iron ore has been inevitably used as the raw material for such reduced iron, that is, the ore material to produce iron ore pellets. Examples of high-grade iron ore include South American ore, concentrate ore that has been upgraded through a beneficiation process in advance, and pellet feed ore.

However, there are challenges in utilizing South American ore, concentrate ore, and pellet feed ore in Japan. Due to Japan's geographical location, freight rates for South American ore will inevitably increase. Meanwhile, concentrate ore and pellet feed ore are often basically derived from high-grade iron ore because it is more efficient to beneficiate high-grade iron ore than low-grade iron ore, and the freight rates for such ore will increase for similar reasons. Therefore, the direct-reduction process that involves the use of high-grade iron ore has cost issues.

Therefore, studies are underway in Japan by applying low-grade iron ore produced in Australia, India, and other countries to the DR process. It is difficult to melt reduced iron produced from low-grade iron ore as a raw material using currently available EAFs. Therefore, the use of a submerged arc furnace (SAF) is being considered.

A melting step performed using a SAF requires a great deal of energy (electrical power) and is therefore required to improve energy efficiency as much as possible. In an EAF, reduced iron with a high metallization rate is typically used to reduce the melting heat.

Patent Literatures 1 to 4 each describe the use of suitable reduced iron with a high metallization rate. However, all of the technologies described apply to heating by arc heat and do not mention the effects obtained when applied to a heating system that uses the Joule heat, like a submerged arc furnace. Further, it is described that an improvement in reduction efficiency in an electric furnace is oriented, and in addition, the preferable range of the metallization rate is 80% or 90% or more.

Given in the forgoing circumstances, the present invention aims to provide, when producing molten pig iron by melting reduced iron in a submerged arc furnace, a method for producing molten pig iron that can achieve high energy efficiency in a melting step.

### Solution to Problem

As a result of conducting concentrated studies to solve the foregoing problems, the inventors discovered that energy efficiency increases throughout the steps from preliminary reduction to melting, provided that the metallization rate of reduced iron charged into a submerged arc furnace remains within a predetermined range. That is, a method for producing molten pig iron according to the present invention, which advantageously solves the foregoing problems, includes a melting step of melting an iron source raw material including reduced iron with an average metallization rate of 60% or greater in a submerged arc furnace to obtain molten pig iron, the melting step also including at least one or both of the following: adding a slag forming material to adjust a basicity (CaO/SiO₂) of molten slag formed on the molten pig iron; and adding a carbonaceous material to adjust a C content of the molten pig iron, wherein the metallization rate refers to a mass percentage of a metallic iron component to a total mass of an iron component contained in the reduced iron, and the basicity (CaO/SiO₂) of the molten slag refers to a mass ratio of CaO to SiO₂.

Note that the method for producing molten pig iron according to the present invention may include the following features, for example, as a solution means that is considered to be more preferable.
(a) The method further includes
   a step for preparing a raw material for direct reduction including a process for acquiring iron ore pellets produced from low-grade iron ore with a total Fe content of 63 mass% or less; and
   a reduced iron production step including a process for producing the reduced iron from the raw material for direct reduction.
(b) The raw material for direct reduction used in the reduced iron production step includes lump ore.
(c) The slag forming material is added to achieve the basicity (CaO/SiO₂) of the molten slag within a range of 1.0 to 1.3.
(d) The carbonaceous material is added to achieve the C content of the molten pig iron within a range of 2 to 5 mass%.

### Advantageous Effects of Invention

The method for producing molten pig iron according to the present invention can achieve high energy efficiency in the production of molten pig iron by melting iron source raw material including reduced iron in a submerged arc furnace.

### Brief Description of Drawings

[Fig. 1] Fig. 1 is a schematic view illustrating a method for producing molten pig iron according to an embodiment of the present invention.
[Fig. 2] Fig. 2 is a graph showing the relationship between the average metallization rate of reduced iron and electric power unit consumption.
[Fig. 3] Fig. 3 is a graph showing the relationship between the average metallization rate of reduced iron and power efficiency.
[Fig. 4] Fig. 4 is a graph showing the relationship between the processing time for reducing iron ore pellets in an electric furnace and the metallization rate.
[Fig. 5] Fig. 5 is a graph showing the relationship between the metallization rate of reduced iron and the reduction energy per unit% of the metallization rate required to obtain the metallization rate.

### Description of Embodiments

Hereinafter, an embodiment of the present invention will be specifically described. The following embodiment only illustrates examples of a facility and a method for embodying the technical idea of the present invention. Thus, the configuration of the present invention is not limited thereto. That is, the technical idea of the present invention may be changed in various ways within the technical scope recited in the claims.

### (Melting step)

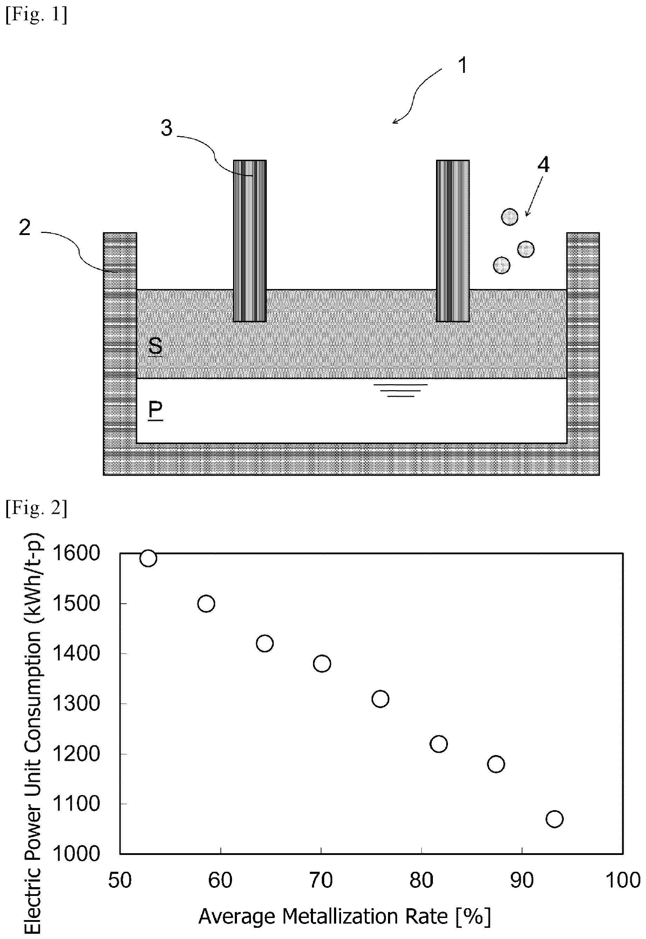

Fig. 1 is a schematic view illustrating the configuration of a submerged arc furnace that can be suitably used for a method for producing molten pig iron according to an embodiment of the present invention. A submerged arc furnace 1 contains molten pig iron P and molten slag S within a furnace wall 2. A plurality of electrodes 3 are inserted into the molten slag S in the submerged arc furnace 1 to generate an arc between the electrodes 3 or between the electrodes 3 and the molten pig iron P, so that a raw material is heated to be melted through resistance heating.

In the present embodiment, an iron source raw material 4 including reduced iron is charged into the submerged arc furnace. Along with this, the operation also includes at least one or both of adding a slag forming material to adjust the basicity (CaO/SiO₂) of the molten slag S formed on the molten pig iron P; and adding a carbonaceous material to adjust the C content of the molten pig iron P. The basicity (CaO/SiO₂) of the molten slag refers to the mass ratio of CaO to SiO₂ in the molten slag.

In the present embodiment, the iron source raw material melted in the submerged arc furnace includes reduced iron. The reduced iron may be produced using the direct-reduction process in advance. Alternatively, commercially available reduced iron may be purchased for use. Iron scrap and scale may also be used as the iron source raw material. The mass percentage of the reduced iron in the iron source raw material is preferably in the range of 50 to 100%.

The total electric power unit consumption is lower when the metallization rate of the reduced iron is 60% or greater, resulting in excellent energy efficiency. The upper limit of the metallization rate is not limited to a particular value. If the metallization rate is too high, the reduced iron, which is the raw material 4 charged into the submerged arc furnace 1 from above the slag S, may conduct electricity in the slag, reducing resistance heat. Thus, the upper limit of the metallization rate should be set to about 90%. Preferably, the upper limit of the metallization rate should be set to 80%.

As the slag forming material, specifically, as a CaO source, limestone (CaCO₃) or quicklime (CaO) is preferably charged, and as a SiO₂ source, silica stone (SiO₂) is preferably charged. The basicity (CaO/SiO₂) of the molten slag S is preferably set in the range of 1.0 to 1.3. The basicity of the molten slag in such a range is preferable when the slag is reduced as a subgrade material, such as cement.

Examples of the carbonaceous material include coke and coal. For example, a carbonaceous material in the form of lumps may be charged, or a carbonaceous material in powder form may be blown by a gas carrier. Ash other than carbon, as a component of the carbonaceous material, is contained as S_{FLUX} and remains in the molten slag S. The C content of the molten pig iron P is preferably adjusted in the range of 2 to 5 mass%. The C content in such a range is preferably used as it is for pig iron, or as a steelmaking raw material for the next step.

### (Step of preparing raw material for direct reduction)

In the present embodiment, it is preferable to include a step of preparing a raw material for direct reduction including a process for acquiring iron ore pellets produced from low-grade iron ore with a total Fe content (hereinafter also referred to as "T.Fe") of 63 mass% or less as a raw material. The raw material for iron ore pellets typically includes iron ore, a binder, and an auxiliary raw material. In the present embodiment, low-grade iron ore refers to iron ore with a T.Fe of 63 mass% or less. In addition, low-grade iron ore preferably has a crystal water content of 4 mass% or greater.

Bentonite is preferable as the binder used for the iron ore pellets. It is also possible to use a known or undefined binder, such as an organic or inorganic binder that can obtain similar effects. As the auxiliary raw material used for the iron ore pellets, quicklime, limestone, or dolomite may be mixed, for example. Further, as the raw material for direct reduction, lump ore may be prepared in addition to the iron ore pellets. Lump ore typically consists of iron ore with a size of about 10 to 35 mm, and is used in a production step of reduced iron without being ground.

The iron ore pellets may be produced through common processes such as grinding, mixing, granulation, and sintering. Alternatively, pre-produced iron ore pellets may be acquired. When the iron ore pellets are produced, conventionally known apparatuses and conditions, such as those described below, can be used for the production steps therefor. The grinding process can be performed with a common grinder, such as a ball mill. The mixing process can be performed with a common high-speed agitating mixer or concrete mixer, for example. The granulation process can be performed with a common pelletizer or drum mixer, for example. The sintering process can be performed with a common rotary kiln or electric furnace, for example.

### (Reduced iron production step)

In the present embodiment, it is preferable to provide a reduced iron production step including a process for producing reduced iron from the raw material for direct reduction. In the reduced iron production step, the reduced iron is produced from iron ore pellets, which are the essential raw material, and from lump ore. To produce the reduced iron, a common solid reducing furnace, such as a shaft furnace, may be used. The reducing gas is not limited to a particular gas, but a hydrogen gas produced with renewable energy, for example, is preferably used. For example, a mixed gas containing, in volume%, H₂: 55% and CO: 35%, with the balance being CO₂ and CH₄, or a mixed gas containing, in volume%, H₂: 75% and CO: 20%, with the balance being CO₂ and N₂, can be preferably used in accordance with the production method used.

### Example

An examination was conducted on the electric power unit consumption per unit mass of molten pig iron and the power efficiency, using the batch-type submerged arc furnace 1 with a capacity of 4 to 6 t, such as the one illustrated in Fig. 1. Table 1 shows the compositions of the types of reduced iron used for the examination. These two types of reduced iron are obtained by using the same low-grade ore pellets with different metallization rates. M.Fe in Table 1 represents metallic iron.

**[Table 1]**

| Type of Reduced Iron | T.Fe | M.Fe | Metallization Rate |
|---|---|---|---|
| | mass% | mass% | % |
| DRI1 | 87.8 | 81.8 | 93.2 |
| DRI2 | 87.8 | 31.2 | 35.5 |

Reduced iron corresponding to 500 kg of molten pig iron and a predetermined amount of blast furnace slag were charged into the submerged arc furnace 1, and an electric current was supplied to the electrodes 3 to start heating. After the start of the supply of an electric current, 400 kg of reduced iron was additionally charged per power consumption of 350 kWh, eight times in total. The electric power unit consumption per unit mass of the molten pig iron (kWh/t-p) was calculated, based on the power consumption when the charged reduced iron entirely melted and the temperature of the molten pig iron reached approximately 1600°C. A value obtained by dividing the sum of the theoretical heating energy for the molten pig iron, the theoretical heating energy for the slag, and the theoretical reduction energy for iron oxide by the electric power unit consumption was calculated as the power efficiency. Table 2 shows the examination conditions and results. The average metallization rate of the charged reduced iron was adjusted by setting the amount of the charged reduced iron constant, and varying the compounding ratio of the reduced iron DRI 1 and the reduced iron DRI 2. The slag basicity was adjusted to 1.26, and the C content of the molten pig iron was adjusted to 2.5 to 4.5 mass%. Slag forming material was used to adjust the slag ratio in the furnace to be 1.5 t/t-p, where the slag ratio is the mass fraction of the molten slag per unit mass. The supplied power was set constant, specifically, 2.7 MW.

**[Table 2]**

| No. | Compounding Ratio of Reduced Iron | | Average Metallization Rate | Electric Power Unit Consumption | Power Efficiency | Remarks |
|---|---|---|---|---|---|---|
| | DRI1 | DRI2 | | | | |
| | % | % | % | kWh/t-p | % | |
| T1 | 30 | 70 | 52.8 | 1590 | 53.1 | Comparative Example |
| T2 | 40 | 60 | 58.6 | 1500 | 52.2 | Comparative Example |
| T3 | 50 | 50 | 64.4 | 1420 | 51.8 | Invention Example |
| T4 | 60 | 40 | 70.1 | 1380 | 53.0 | Invention Example |
| T5 | 70 | 30 | 75.9 | 1310 | 54.0 | Invention Example |
| T6 | 80 | 20 | 81.7 | 1220 | 53.0 | Invention Example |
| T7 | 90 | 10 | 87.4 | 1180 | 53.0 | Invention Example |
| T8 | 100 | 0 | 93.2 | 1070 | 48.0 | Invention Example |

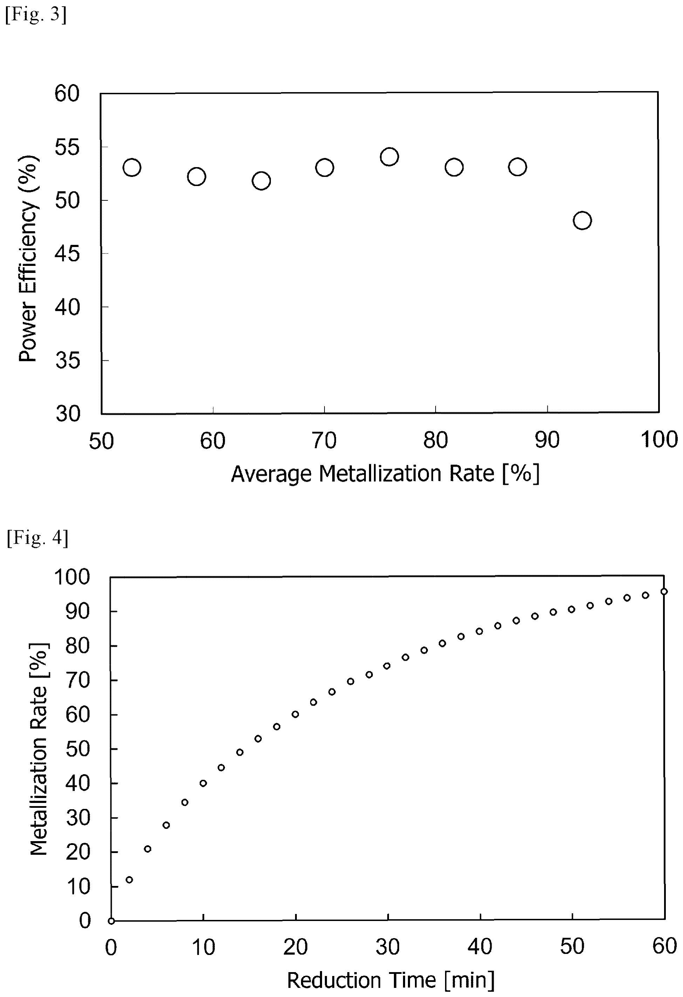

Fig. 2 shows the relationship between the average metallization rate and electric power unit consumption in Table 2. Fig. 3 shows the relationship between the average metallization rate and the power efficiency in Table 2. From the results in Fig. 2, it is found that the electric power unit consumption decreases substantially linearly with respect to the average metallization rate. This indicates that the energy required for reduction in the submerged arc furnace per unit% of the decreased metallization rate is substantially constant. This is consistent with the fact that the power efficiency shown in Fig. 3 is substantially constant. The reason that the power efficiency of No. T8 is slightly lower is considered to be because the metallization rate of the reduced iron was too high, which caused an electric current to be supplied to not a slag layer but a raw material layer that has deposited on the slag layer.

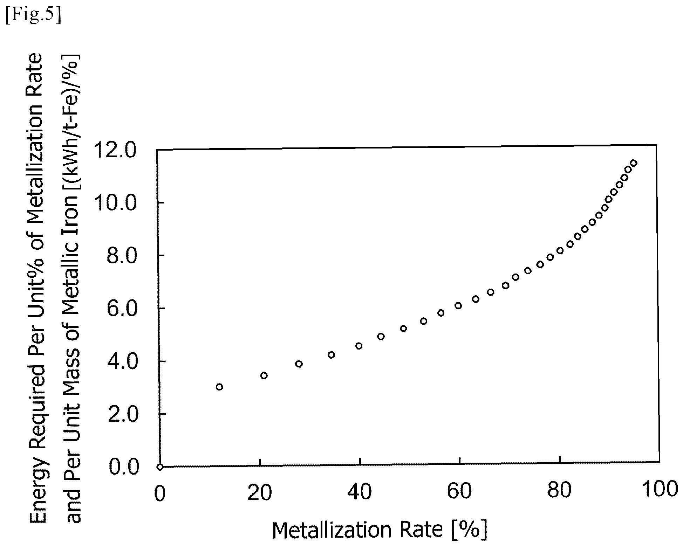

Fig. 4 shows the relationship between the processing time for reducing iron ore pellets, which are the raw material for the reduced iron DRI 1 and DRI 2 shown in Table 1, using gas in an electric furnace, and the metallization rate. The reduction was performed in an atmosphere containing 50 volume% of CO and 50 volume% of H₂ at 900°C. As is clear from Fig. 4, the reduction speed is high at the initial stage of the reduction, but becomes lower with an increase in the metallization rate. The reason for this is considered to be as follows. Gas reduction starts from the peripheral portions of the pellets. Therefore, as the metallization rate of the pellets increases, gas diffusion resistance as well as the reaction interface decreases in a region from the surface to the non-reduced portion of the central portion. This results in increasing the energy required for reduction per unit% of the metallization rate in reduction using gas to produce reduced iron, with an increase in the metallization rate. The energy required for the reduction test was converted into the amount of reduced iron charged into the submerged arc furnace. Fig. 5 illustrates the relationship between the energy required for reduction per unit% of the metallization rate of the reduced iron and per unit mass of metallic iron and the metallization rate of the reduced iron. Meanwhile, as described previously, the energy required per unit% of the metallization rate of the reduced iron and per unit mass of molten pig iron in the submerged arc furnace was substantially constant, and was about 6 (kWh/t-p)/%. Accordingly, it is found that the energy required for reduction is smaller for reduction in the submerged arc furnace at a metallization rate of 60% or greater, and the difference tends to become greater. In view of operational variation and the like, the metallization rate of the reduced iron charged into the submerged arc furnace is preferably 60 to 80%.

### Reference Signs List

- 1: submerged arc furnace (SAF)
- 2: furnace wall
- 3: electrode
- 4: (charged) raw material
- P: molten pig iron
- S: molten slag

## Claims

1. A method for producing molten pig iron, comprising:
a melting step of melting an iron source raw material including reduced iron with an average metallization rate of 60% or greater in a submerged arc furnace to obtain molten pig iron, the melting step also including at least one or both of the following; adding a slag forming material to adjust a basicity (CaO/SiO₂) of molten slag formed on the molten pig iron; and adding a carbonaceous material to adjust a C content of the molten pig iron, wherein
the metallization rate refers to a mass percentage of a metallic iron component to a total mass of an iron component contained in the reduced iron, and the basicity (CaO/SiO₂) of the molten slag refers to a mass ratio of CaO to SiO₂.

2. The method for producing molten pig iron according to claim 1, further comprising:
a step for preparing a raw material for direct reduction including a process for acquiring iron ore pellets produced from low-grade iron ore with a total Fe content of 63 mass% or less; and
a reduced iron production step including a process for producing the reduced iron from the raw material for direct reduction.

3. The method for producing molten pig iron according to claim 2, wherein
the raw material for direct reduction used in the reduced iron production step includes lump ore.

4. The method for producing molten pig iron according to any one of claims 1 to 3, wherein
the slag forming material is added to achieve the basicity (CaO/SiO₂) of the molten slag within the range of 1.0 to 1.3.

5. The method for producing molten pig iron according to any one of claims 1 to 4, wherein
the carbonaceous material is added to achieve the C content of the molten pig iron within the range of 2 to 5 mass%.
